# EUROPÄISCHE PATENTSCHRIFT

(11) **EP 2 825 375 B1**
(45) Veröffentlichungstag und Bekanntmachung des Hinweises auf die Patenterteilung: **01.05.2024**
(21) Anmeldenummer: 12709578.4
(22) Anmeldetag: 12.03.2012
(51) Int. Cl.: A22C 7/00, B30B 15/16

(54) **VERFAHREN ZUM FORMEN VON LEBENSMITTELPORTIONEN IN MEHREREN AUFNAHMEN**
METHOD FOR MOULDING FOOD PORTIONS IN SEVERAL BATCHES
PROCÉDÉ POUR MOULER DES PRODUITS ALIMENTAIRES EN PLUSIEURS LOTS

(43) Veröffentlichungstag der Anmeldung: 21.01.2015
(73) Patentinhaber: Nienstedt GmbH, 45721 Haltern am See (DE)
(72) Erfinder: GUTMANN, Michael, 51379 Leverkusen (DE); GRONEBERG-NIENSTEDT, Petra, 40237 Düsseldorf (DE)
(74) Vertreter: btb IP Bungartz Baltzer Partnerschaft mbB Patentanwälte
(86) Internationale Anmeldenummer: PCT/EP2012/054229
(87) Internationale Veröffentlichungsnummer: WO 2013/135264

(56) Entgegenhaltungen:
- EP-A1- 0 605 096
- WO-A1-94/05487
- DE-A1- 19 737 248
- FR-A1- 2 329 205
- US-A- 2 850 966

## Beschreibung

Die Erfindung betrifft ein Verfahren zum Formen von Lebensmittelportionen nach dem Oberbegriff des Anspruchs 1.

Eine Vorrichtung zum Formen von Lebensmittelportionen in unterschiedliche Formgebungen ist aus der WO 2007/096363 A1 bekannt. Diese beschreibt ein Verfahren zum Herstellen geformter Fleischportionen aus gewachsenen ganzen Fleischstücken. Eine weitere Vorrichtung, bei der zwei oder mehr Stücke eines Schinkens parallel geformt werden, ist aus der FR 75 34028 bekannt.

Bei den aus dem Stand der Technik bekannten Verfahren werden in der Regel ungleichmäßig große Lebensmittelportionen in die Formenpresse eingebracht. Auch sind gewisse Gewichtstoleranzen bei der Portionierung der Lebensmittel üblich. Beim Pressen kommt es daher häufig vor, dass die Formen, in welche die Lebensmittelportion eingeformt werden soll, nicht ganz ausgefüllt werden.

Aufgabe der Erfindung ist es daher, ein verbessertes Verfahren zum Formen einer Lebensmittelportion zur Verfügung zu stellen.

Die Aufgabe wird erfindungsgemäß mittels eines Verfahrens zum Formen von Lebensmittelportionen nach Anspruch 1 gelöst.

Es wird zunächst die Verwendung der folgenden Vorrichtung zum Formen von Lebensmittelportionen umfassend eine fluidtechnische Presse vorgeschlagen: Die Presse dieser Vorrichtung weist zumindest einen fluidtechnischen Druckerzeuger sowie zumindest zwei Aktoren auf, wobei die Aktoren jeweils einen Arbeitszylinder umfassen und wobei die Arbeitszylinder fluidtechnisch verbunden sind. Vorzugsweise ist vorgesehen, dass eine Matrize zumindest zwei getrennte Aufnahmen zur Aufnahme von Lebensmittelportionen aufweist. Die Aufnahmen wirken mit jeweils einem Presswerkzeug zusammen, wobei die Presswerkzeuge jeweils mittels eines Aktors, insbesondere mittels eines Pressstempels bewegbar sind.

Im Sinne der Erfindung sind unter Fluidtechnik alle Verfahren zu verstehen, in denen Energie durch die Strömung von Gasen oder Flüssigkeiten übertragen wird, insbesondere Hydraulik und Pneumatik. Im Folgenden werden Ausführungsbeispiele für hydraulische Vorrichtungen beschrieben - diese können für den Fachmann selbstverständlich auch pneumatisch oder hydropneumatisch ausgeführt sein.

Vorteil der vorgeschlagenen Vorrichtung ist, dass die Lebensmittelportionen gleichmäßig und schonend gepresst werden. Insbesondere bei Lebensmittelportionen, die unterschiedliche Höhen aufweisen, wenn diese in die Form eingebracht sind, werden die Presswerkzeuge zuerst auf die Lebensmittelportionen aufgesetzt. Trifft ein erstes Presswerkzeug eine Lebensmittelportion, bevor weitere Presswerkzeuge auf weitere Lebensmittelportionen einwirken können, kommt es über die hydraulische Verbindung zu einem Druckausgleich zwischen den Arbeitszylindern. Der Gegendruck durch die Lebensmittelportion bedingt, dass über die hydraulische Verbindung zuerst von einem Druckerzeuger gefördertes Hydraulikmittel in die verbleibenden Arbeitszylinder gepumpt wird, bis sich in allen Arbeitszylindern der gleiche Druck eingestellt hat. Auf diese Weise werden alle Lebensmittelportionen mit dem gleichen Druck geformt.

Es versteht sich, dass insbesondere bedingt durch Widerstände in den Leitungen zwischen den Arbeitszylindern während der Formgebung nicht die ganze Zeit ein identischer Druck in den Arbeitszylindern herrscht. Jedoch kann durch den Druckausgleich während der Formung ein Ausgleich auch bei plötzlicher Widerstandsänderung, beispielsweise bedingt durch die Zusammensetzung der Lebensmittelportion, reagiert werden, insbesondere ohne dass aufwendige Regelungsmechanismen notwendig sind.

Lebensmittelportionen sind erfindungsgemäß Gemüse, stärkehaltige Produkte wie Kartoffeln oder Reis, Fleisch, Fisch und/oder Süßwaren. Auch sind die Lebensmittelportionen gefroren auf einer Temperatur von etwa -20 °C bis etwa -5 °C. Soweit in der vorliegenden Erfindung der Begriff "etwa" verwendet wird, gibt dieser einen Toleranzbereich an, den der auf dem vorliegenden Gebiet tätige Fachmann für üblich betrachtet. Insbesondere ist unter dem Begriff "etwa" ein Toleranzbereich von bis t20 %, bevorzugt bis ±10 % zu verstehen.

Der Druckerzeuger ist vorzugsweise als Hydraulikpumpe ausgebildet. In einer weiteren Ausgestaltung weist der Druckerzeuger einen Kolben auf, der beispielsweise elektromechanisch angetrieben ist.

Die Aktoren weisen hydraulische Arbeitszylinder mit Arbeitskolben auf. Die Arbeitskolben sind über einen Pressstempel mit dem Presswerkzeug verbunden. Das Presswerkzeug wird in eine Aufnahme geführt beziehungsweise gepresst, die von einer Matrize aufgewiesen wird. Vorzugsweise befindet sich in der Matrize jeweils eine Aufnahme für jedes Presswerkzeug. In einer weiteren Ausgestaltung ist vorgesehen, dass mehrere oder alle Presswerkzeuge in eine Aufnahme geführt werden, insbesondere dann, wenn mittels der Presswerkzeuge die Portionen ausgestanzt werden. Auch können mehrere Matrizen vorgesehen sein. Insbesondere sind die Matrizen austauschbar ausgestaltet.

Mit der Formvorrichtung können mehrere Portionen in einem Durchgang gepresst werden. Vorzugsweise sind zwei bis zehn Pressstempel vorgesehen, die insbesondere jeweils eine Lebensmittelportion formen. Da die Pressstempel jeweils den gleichen Druck auf die Lebensmittelportionen ausüben, ist eine gleichbleibende Qualität der geformten Lebensmittelportionen gewährleistet.

Die Vorrichtung weist gemäß einer Ausgestaltung eine Regelungseinheit auf. Die Regelungseinheit steuert oder regelt die Formvorrichtung über einen offenen oder geschlossenen Regelkreis. Im Rahmen der Erfindung bezeichnet der Begriff "Steuerung" offene als auch geschlossene Regelkreise.

In einer Ausführungsform ist vorgesehen, dass mittels zumindest eines Ventils der hydraulische Fluss in einen Arbeitszylinder beziehungsweise zwischen den Arbeitszylindern steuerbar oder regelbar ist. Insbesondere kann der hydraulische Fluss unterbrochen werden. Beispielsweise ist vorgesehen, dass die hydraulische Verbindung zwischen den Arbeitsventilen unterbrochen wird. So ist in einer Ausgestaltung ein Ventil vorgesehen, das den hydraulischen Fluss unterbinden kann. In einer weiteren Ausgestaltung ist vorgesehen, dass zumindest eine vorzugsweise ansteuerbare Drossel den Fluss von Hydraulikflüssigkeit zwischen den Arbeitszylindern begrenzt.

Die Unterbindung oder Drosselung der hydraulischen Kommunikation zwischen den Arbeitszylindern kann beispielsweise dazu genutzt werden, die Presswerkzeuge unabhängig voneinander in die Aufnahme zu fahren. Beispielsweise ist eine Wegesteuerung oder eine Drucksteuerung möglich, die bis zu einem definierten Verfahrpunkt und/oder einem definierten Druckanstieg praktiziert wird. Nach Überschreiten eines Schwellwertes wird dann die hydraulische Kommunikation zwischen den Arbeitszylindern freigegeben. Dies erlaubt eine hohe Taktzahl, da der Druckausgleich zwischen den Arbeitszylindern erst zum Schluss des Formvorganges erfolgt und die Presse bis Erreichen des Schwellwertes sehr schnell verfahren werden kann.

In einer bevorzugten Ausgestaltung ist vorgesehen, dass die Vorrichtung zumindest einen Flusssensor aufweist, mittels dem ein hydraulischer Fluss von und zu einem Arbeitszylinder ermittelbar ist. Vorzugsweise ist ein Flusssensor vorgesehen, mittels dem ein Fluss zwischen den Arbeitszylindern ermittelbar ist. Der Fluss zu einem Arbeitszylinder oder zwischen den Arbeitszylindern kann Aufschluss über den durch die Lebensmittelportion bedingten Widerstand geben. Auch kann ermittelt werden, ob alle Presswerkzeuge mit dem gleichen Druck in die Aufnahmen fahren. Unerwartete Flüsse beziehungsweise Flussverläufe über die Zeit können beispielsweise für Fehlfunktionen stehen. Beispielsweise kann derart detektiert werden, ob eine Aufnahme nicht gefüllt wurde oder in der Aufnahme Teile, beispielsweise Knochen oder Maschinenteile, angeordnet sind, die nicht für die Portionierung beziehungsweise Formgebung vorgesehen sind.

In einer weiteren Ausgestaltung der Formvorrichtung ist vorgesehen, dass die Presswerkzeuge mechanisch verbindbar sind. Insbesondere ist eine vorzugsweise reversible Kraftübertragungseinrichtung zwischen den Presswerkzeugen oder damit verbundenen Teilen vorgesehen. Beispielsweise kann die Formvorrichtung derart gestaltet sein, dass die Presswerkzeuge vorzugsweise in der Ausgangsposition zueinander arretiert sind. Wird die Presse angesteuert, verfahren die Presswerkzeuge im Verbund in Richtung der Aufnahmen und gegebenenfalls zumindest teilweise in diese hinein.

An einem definierten Verfahrpunkt ist ein Lösemechanismus vorgesehen, der die mechanische Verbindung zwischen den Presswerkzeugen löst. Danach sind die Presswerkzeuge über die kommunizierenden Arbeitszylinder verbindbar oder verbunden. Diese Ausgestaltung ermöglicht eine der Drucksteuerung mit kommunizierenden ArbeitszyLindern vorgelagerte Wegesteuerung ohne großen regelungstechnischen Aufwand.

Weiterhin wird das Verfahren zum Formen von Lebensmittelportionen mittels der oben beschriebenen Formvorrichtung derart durchgeführt, dass die Kraft der Presswerkzeuge auf die Lebensmittelportionen derart erhöht wird, dass alle Presswerkzeuge den gleichen Druck auf die jeweiligen Lebensmittelportionen ausüben. Dabei sind die Arbeitszylinder, welche die Presswerkzeuge betätigen, hydraulisch miteinander verbunden.

In einer Ausgestaltung wird die Verformung der Lebensmittelportionen beendet, wenn alle Lebensmittelportionen in der Matrize die gewünschte Verformung erreicht haben. Vorzugsweise fahren die Presswerkzeuge hoch, wenn diese über eine bestimmte Zeit einen bestimmten Maximaldruck auf die Lebensmittelportionen ausgeübt haben. Der Maximaldruck wird beispielsweise im hydraulischen System der Presse ermittelt. Für unterschiedliche Lebensmittel und Portionsgrößen sind unterschiedliche Maximaldrücke und Presszeiten vorgesehen. Insbesondere wird die Druckmessung kombiniert mit einer Verfahrwegermittlung der Pressstempel, insbesondere jedes einzelnen Pressstempels.

Vorteil an dem vorgeschlagenen Verfahren ist, dass eine unvollständige Verformung der Lebensmittelportionen ausgeschlossen wird. Insbesondere ist es ein Ziel bei der Lebensmittelformung, die Aufnahme zumindest in den zur Pressrichtung senkrechten Erstreckungen vollständig auszufüllen.

In den aus dem Stand der Technik bekannten Verfahren kommt es häufig bei zu kleiner Portionierung - die aber noch im Toleranzbereich des jeweiligen Produktes liegt - vor, dass die Aufnahmeform nicht vollständig ausgefüllt wird. Die gewünschte, meist natürlich anmutende Form wird somit nicht erreicht. 0ft sieht das Produkt angebissen aus. Im Gegensatz dazu werden durch das Verfahren nach der Erfindung auch kleine Lebensmittelportionen, die neben größeren Lebensmittelportionen in der Matrize in insbesondere unterschiedlichen Aufnahmen angeordnet sind, sicher in die gewünschte Form gepresst. Das vorgeschlagene Verfahren erlaubt nunmehr einen großen Toleranzbereich der Massen und/oder der Dimensionen der gleichzeitig in einem Arbeitsgang der Presse zu verarbeitenden Lebensmittelportionen. Gleichzeitig ist nur ein Druckerzeuger notwendig, der alle Aktoren der Presse antreibt.

Eine Variante des Verfahrens sieht vor, dass die Presswerkzeuge einen definierten Betrag auf die Matrize zufahren oder einen definierten Betrag in die Aufnahmen einfahren, bevor die Arbeitszylinder hydraulisch verbunden werden. Vorzugsweise ist eine dem Druckausgleich in den Arbeitszylindern vorgeschaltete Wegesteuerung vorgesehen.

In einer weiteren Ausgestaltung ist vorgesehen, dass die Arbeitszylinder derart angesteuert werden, dass diese zu einem bestimmten Zeitpunkt rütteln, das heißt die Lebensmittelportion mittels der Presswerkzeuge in die Aufnahme durch schlagende Bewegung einklopfen. In einer weiteren Ausgestaltung ist vorgesehen, dass die Presse derart angesteuert wird, dass die Presswerkzeuge die Lebensmittelportion in die Form massieren. Im Sinne der Erfindung wird unter "massieren" eine kreisende, streichende und/oder wellenförmige Bewegung der Presswerkzeuge in Kontakt mit der Lebensmittelportion verstanden.

In einer weiteren Variante ist vorgesehen, dass die Presswerkzeuge mechanisch verbunden werden. Vorzugsweise wird die mechanische Verbindung zwischen den Presswerkzeugen bei einem Überfahren der Presswerkzeuge über einen definierten Punkt gelöst. Alternativ oder zusätzlich ist in einer Ausgestaltung vorgesehen, bei der die Kommunikation der Arbeitszylinder zumindest zeitweise unterbrochen oder gedrosselt wird.

Beispielsweise können die Pressstempel unabhängig voneinander in die Aufnahmen gefahren und erst in einem beispielsweise abschließenden Schritt, der stattfindet bevor die Presswerkzeuge wieder hochfahren, die Kommunikation zwischen den Arbeitszylindern freigegeben werden. Die Presswerkzeuge fahren insbesondere dann wieder hoch, das heißt in ihre Ruheposition, wenn alle Presswerkzeuge einen bestimmten Weg in die Aufnahmen zurückgelegt haben, ein bestimmter Pressdruck über eine bestimmte Zeit erreicht und/oder ein bestimmter Schwellwert des Flusses in dem hydraulischen System der Vorrichtung unterschritten oder überschritten wurde.

Insbesondere ist vorgesehen, dass in Abhängigkeit von zumindest einem Betriebsparameter der Pressvorrichtung ein hydraulischer Fluss in die Arbeitszylinder und/oder zwischen den Arbeitszylindern geregelt wird. Die Regelung des hydraulischen Flusses umfasst insbesondere eine Schaltung der Ventile, welche die Kommunikation zwischen den Arbeitszylindern steuert. Die relevanten Betriebsparameter können beispielsweise ein Verfahrweg der Pressstempel, ein Druck an zumindest einer Stelle des hydraulischen Systems und/oder ein Fluss von Hydraulikmittel an zumindest einer Stelle im hydraulischen System sein.

Weiterhin wird eine Lebensmittelportion vorgeschlagen, die mit dem oben beschriebenen Verfahren hergestellt beziehungsweise geformt ist.

Eine weitere vorteilhafte Ausgestaltung geht aus der nachfolgenden Zeichnung hervor. Die dort dargestellte Weiterbildung ist jedoch nicht beschränkend auszulegen, vielmehr können die dort beschriebenen Merkmale mit den oben beschriebenen Merkmalen zu weiteren Ausgestaltungen kombiniert werden.

In der Zeichnung zeigt Figur leinen schematischen Aufbau einer Formvorrichtung zur Durchführung des erfindungsgemäßen Verfahrens.

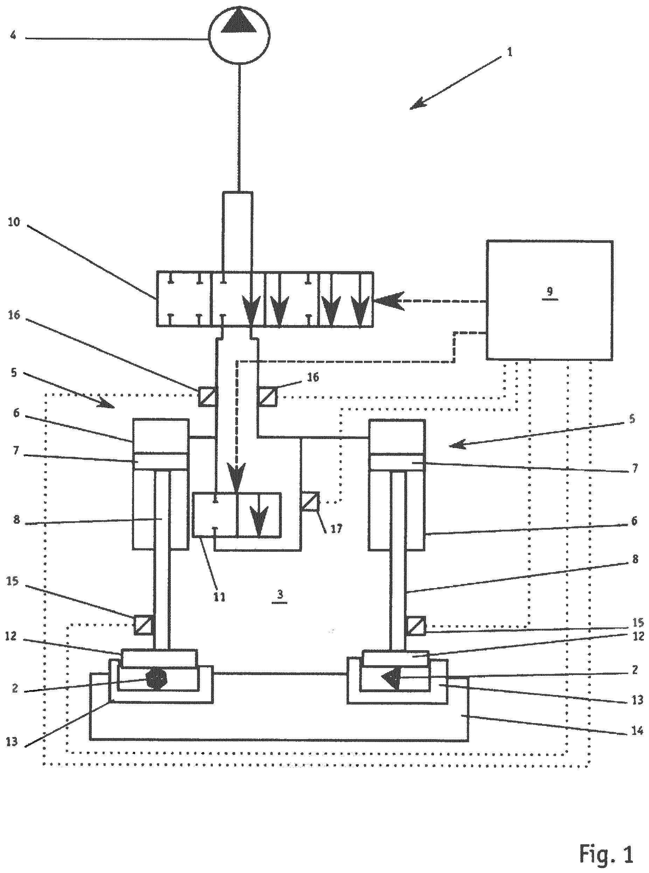

Fig. 1 zeigt einen schematischen Aufbau einer Vorrichtung 1 zum Formen von Lebensmittelportionen 2. Die Vorrichtung 1 weist eine Presse 3 auf. Die Presse 3 umfasst einen Druckerzeuger 4, der in der gezeigten Ausgestaltung als Hydraulikpumpe ausgestaltet ist. Weiterhin umfasst die Presse 3 zumindest zwei Aktoren 5, die einen Arbeitszylinder 6, einen Kolben 7 sowie einen Presstempel 8 aufweisen. Die Vorrichtung 1 umfasst des Weiteren eine Steuerung 9, mittels der die Presse 3 angesteuert wird. Die Darstellung in Fig. 4 ist stark vereinfacht und soll nur das grundlegende Prinzip beschreiben. So geht aus der Figur lediglich der Antrieb der Aktoren 5 in eine Richtung hervor. Für den Fachmann versteht es sich, dass weitere Maßnahmen getroffen werden, sodass beispielsweise die Pressstempel 8 wieder zurückgefahren werden können.

Die Aktoren 5 werden über den Druckerzeuger 4 angetrieben. Zwischen dem Druckerzeuger 4 und den Aktoren 5 beziehungsweise den Arbeitszylindern 6 ist ein Ventil 10 angeordnet. Über das Ventil 10 können beide Aktoren 5 separat oder gemeinsam angesteuert werden.

Zwischen den Arbeitszylindern 6 ist ein weiteres Ventil 11 angeordnet. Über das Ventil 11 kann eine hydraulische Verbindung zwischen den Arbeitszylindern 5 hergestellt werden. Sowohl das Ventil 10 als auch das Ventil 11 werden über die Steuerung 9 angesteuert.

Presswerkzeuge 12 sind an den Pressstempeln 8 angeordnet. Jedem Presswerkzeug 12 ist eine Aufnahme 13 in einer Matrize 14 zugeordnet. In die Aufnahmen 13 werden die Lebensmittelportionen 2 vorzugsweise gefroren eingebracht. Nach Einbringen der Lebensmittelportionen 2 in die Aufnahmen 13 wird das Ventil 10 derart angesteuert, dass die Arbeitszylinder 6 mit Druck beaufschlagt werden. Je nach erwarteter Lebensmittelportion 2 und der zu erreichenden Verformung in den jeweiligen Aufnahmen werden die Aktoren 5 derart angesteuert, dass diese gleichzeitig oder zeitversetzt angetrieben werden. Vorzugsweise werden die Aktoren 5 derart angesteuert, dass die Pressstempel 8 in einem ersten Schritt einen festgelegten Weg zurücklegen. Die Sensoren 15 melden der Steuerung 9 den zurückgelegten Weg der Pressstempel 8 oder das Erreichen einer Position.

Alternativ oder zusätzlich kann die Position über den Fluss der Hydraulikflüssigkeit bestimmt werden, der beispielsweise mittels der Flusssensoren 16 erfasst wird. Wird eine definierte Position überschritten, öffnet das Ventil 11 und ein Druckausgleich zwischen den Arbeitszylindern 6 erfolgt. Nun fahren alle Presswerkzeuge 12 mit dem gleichen Druck auf die Lebensmittelportionen 2. Ist beispielsweise eine Lebensmittelportion 2 kleiner als alle anderen, die in der Matrize angeordnet sind, fährt das Presswerkzeug 12 tiefer in die Aufnahme 13 ein, bis auf alle Lebensmittelportionen 2 der gleiche Druck beaufschlagt ist. Auf diese Weise wird sichergestellt, dass die Verformung aller Lebensmittelportionen 2 vollständig erfolgt.

Ein Flusssensor 17 überwacht den Fluss zwischen den Arbeitszylindern 6. Werden Unregelmäßigkeiten ermittelt, die mit einer Störung zusammenhängen könnten, gibt die Steuerung 9 ein Alarmsignal aus. Des Weiteren wird der Arbeitsgang beendet und die Presswerkzeuge 12 fahren wieder aus der Ausnehmung heraus, wenn ein definierter Maximaldruck für eine bestimmte Zeit gehalten wurde und wobei in der Zeit kein Fluss oder ein Fluss unterhalb eines definierten Schwellwertes zwischen den Arbeitszylindern 6 detektiert wurde.

### Bezugszeichenliste

- 1: Vorrichtung
- 2: Lebensmittelportion
- 3: Presse
- 4: Druckerzeuger
- 5: Aktor
- 6: Arbeitszylinder
- 7: Kolben
- 8: Pressstempel
- 9: Steuerung
- 10: Ventil
- 11: Ventil
- 12: Presswerkzeug
- 13: Aufnahme
- 14: Matrize
- 15: Sensor
- 16: Flusssensor
- 17: Flusssensor

## Patentansprüche

1. Verfahren zum Formen von auf eine Temperatur von zwischen -20 °C und -5 °C gefrorenen Lebensmittelportionen (2) in Form von Gemüse, Kartoffeln, Reis oder anderen stärkehaltigen Produkten, Fleisch, Fisch und/oder Süßwaren, bei dem zumindest zwei Lebensmittelportionen (2) jeweils in eine Aufnahme (13) einer Matrize (14) einer Vorrichtung (1) eingebracht werden, wobei die Vorrichtung (1), eine fluidtechnische Presse (3) mit einem fluidtechnischen Druckerzeuger (4) sowie zumindest zwei, jeweils einen Arbeitszylinder (6) aufweisende Aktoren (5) und eine Matrize (14) aufweist, wobei die Matrize (14) zumindest zwei getrennte Aufnahmen (13) zur Aufnahme von Lebensmittelportionen (2) aufweist, die Aufnahmen (13) mit jeweils einem Presswerkzeug (12) zusammenwirken und die Presswerkzeuge (12) jeweils mittels des Aktors (5) bewegbar sind, wobei
eine Vorrichtung (1) verwendet wird, deren Arbeitszylinder (6) fluidtechnisch miteinander verbunden sind und die Kraft der Presswerkzeuge (12) auf die Lebensmittelportionen (2) derart erhöht wird, dass alle Presswerkzeuge (12) den gleichen Druck auf die jeweilige Lebensmittelportion (2) ausüben.

2. Verfahren zum Formen von Lebensmittelportionen (2) nach dem vorhergehenden Anspruch, **dadurch gekennzeichnet, dass** eine Vorrichtung (1) verwendet wird, bei der mittels zumindest eines Ventils (11) der Fluss zwischen den Arbeitszylindern (6) steuerbar oder regelbar ist.

3. Verfahren zum Formen von Lebensmittelportionen (2) nach dem vorhergehenden Anspruch, **dadurch gekennzeichnet, dass** eine Vorrichtung (1) verwendet wird, die zumindest einen Flusssensor (16, 17) aufweist, mittels dem ein Fluss von und zu einem Arbeitszylinder (6) ermittelbar ist.

4. Verfahren zum Formen von Lebensmittelportionen (2) nach einem der vorhergehenden Ansprüche, **dadurch gekennzeichnet, dass** die Presswerkzeuge (12) einen definierten Betrag auf die Matrize (14) zufahren oder einen definierten Betrag in die Aufnahmen (13) einfahren, bevor die Arbeitszylinder (6) fluidtechnisch verbunden werden.

5. Verfahren zum Formen von Lebensmittelportionen (2) nach einem der vorhergehenden Ansprüche, **dadurch gekennzeichnet, dass** die Presswerkzeuge (12) mechanisch verbunden werden.

6. Verfahren zum Formen von Lebensmittelportionen (2) nach Anspruch 5, **dadurch gekennzeichnet, dass** die mechanische Verbindung zwischen den Presswerkzeugen (12) bei einem Überfahren der Presswerkzeuge (12) über einen definierten Punkt gelöst wird.

7. Verfahren zum Formen von Lebensmittelportionen (2) nach einem der vorhergehenden Ansprüche, **dadurch gekennzeichnet, dass** in Abhängigkeit von zumindest einem Betriebsparameter der Formvorrichtung (1) ein Fluss in die Arbeitszylinder (6) und/oder zwischen den Arbeitszylindern (6) geregelt wird.

## Claims

1. Method for forming food portions (2) in the form of vegetables, potatoes, rice or other starch-containing products, meat, fish and/or confectionery frozen to a temperature of between -20°C and -5°C, in which at least two food portions (2) are respectively introduced into a receptacle (13) of a die (14) of a device (1), wherein the device (1) comprises a fluid-technical press (3) with a fluid-technical pressure generator (4) and at least two actuators (5), each comprising a working cylinder (6), and a die (14), wherein the die (14) comprises at least two separate receptacles (13) for receiving food portions (2), the receptacles (13) cooperate with one pressing tool (12) respectively and the pressing tools (12) are movable respectively by means of the actuator (5), wherein
a device (1) is used whose working cylinders (6) are fluidically connected to one another and the force of the pressing tools (12) on the food portions (2) is increased in such a way that all the pressing tools (12) exert the same pressure on the respective food portion (2).

2. Method for forming food portions (2) according to the preceding claim, **characterized in that** a device (1) is used in which the flow between the working cylinders (6) can be controlled or regulated by means of at least one valve (11).

3. Method for forming food portions (2) according to the preceding claim, **characterized in that** a device (1) is used which comprises at least one flow sensor (16, 17) by means of which a flow from and to a working cylinder (6) can be determined.

4. Method for forming food portions (2) according to one of the preceding claims, **characterized in that** the pressing tools (12) move a defined amount towards the die (14) or move a defined amount into the receptacles (14) before the working cylinders (6) are fluidically connected.

5. Method for forming food portions (2) according to one of the preceding claims, **characterized in that** the pressing tools (12) are mechanically connected.

6. Method for forming food portions (2) according to claim 5, **characterized in that** the mechanical connection between the pressing tools (12) is released when the pressing tools (12) pass over a defined point.

7. Method for forming food portions (2) according to one of the preceding claims, **characterized in that** a flow into the working cylinders (6) and/or between the working cylinders (6) is controlled in dependence on at least one operating parameter of the forming device (1).

## Revendications

1. Procédé pour former des portions d'aliments (2) sous forme de légumes, de pommes de terre, de riz ou d'autres produits contenant de l'amidon, de viande, de poisson et/ou de confiserie, qui sont congelés à une température comprise entre -20°C et -5°C, dans lequel au moins deux portions d'aliments (2) sont introduites chacune dans un récepteur (13) d'une matrice (14) d'un dispositif (1), le dispositif (1) comprenant une presse fluidique (3) avec un générateur de pression fluidique (4) ainsi qu'au moins deux actionneurs (5) comprenant chacun un cylindre de travail (6) et une matrice (14), la matrice (14) comprenant au moins deux récepteurs séparés (13) pour recevoir des portions d'aliments (2), les récepteurs (13) coopérant chacun avec un outil de pressage (12) et les outils de pressage (12) pouvant être déplacés chacun au moyen de l'actionneur (5), où
on utilise un dispositif (1) dont les cylindres de travail (6) sont reliés entre eux par la technique des fluides et la force des outils de pressage (12) sur les portions d'aliments (2) est augmentée de telle sorte que tous les outils de pressage (12) exercent la même pression sur la portion d'aliment (2) correspondante.

2. Procédé pour former des portions d'aliments (2) selon la revendication précédente, **caractérisé en ce qu'**on utilise un dispositif (1) dans lequel le flux entre les cylindres de travail (6) peut être commandé ou réglé au moyen d'au moins une vanne (11).

3. Procédé pour former des portions d'aliments (2) selon la revendication précédente, **caractérisé en ce qu'**on utilise un dispositif (1) qui comprend au moins un capteur de flux (16, 17) au moyen duquel on peut déterminer un flux en provenance et à destination d'un cylindre de travail (6).

4. Procédé pour former des portions d'aliments (2) selon l'une des revendications précédentes, **caractérisé en ce que** les outils de pressage (12) avancent d'une quantité définie vers la matrice (14) ou entrent d'une quantité définie dans les récepteurs (14) avant que les cylindres de travail (6) soient reliés par la technique des fluides.

5. Procédé pour former des portions d'aliments (2) selon l'une quelconque des revendications précédentes, **caractérisé en ce que** les outils de pressage (12) sont reliés mécaniquement.

6. Procédé pour former des portions d'aliments (2) selon la revendication 5, **caractérisé en ce que** la liaison mécanique entre les outils de pressage (12) est rompue lors du passage des outils de pressage (12) au-dessus d'un point défini.

7. Procédé pour former des portions d'aliments (2) selon l'une quelconque des revendications précédentes, **caractérisé en ce qu'**un flux dans les cylindres de travail (6) et/ou entre les cylindres de travail (6) est régulé en fonction d'au moins un paramètre de fonctionnement du dispositif de moulage (1).
